# EUROPEAN PATENT SPECIFICATION

(11) **EP 2 966 897 B1**
(45) Date of publication and mention of the grant of the patent: **24.05.2017**
(21) Application number: 14382270.8
(22) Date of filing: 10.07.2014
(51) Int. Cl.: H04W 28/16, H04W 28/02

(54) **Method and network entity for controlling uplink congestion in a wireless network**
Verfahren und Netzwerkeinheit zur Uplink-Überlastregelung in einem drahtlosen Netzwerk
Procédé et entité de réseau permettant de régler une congestion de liaison montante dans un réseau sans fil

(43) Date of publication of application: 13.01.2016
(73) Proprietor: Vodafone IP Licensing Limited, The Connection Newbury Berkshire RG14 2FN (GB)
(72) Inventor: De Pasquale, Andrea, 28042 Madrid (ES); Le Pezennec, Yannick, 28042 Madrid (ES); Garcia, Aitor, 28042 Madrid (ES)
(74) Representative: Boult Wade Tennant

(56) References cited:
- WO-A1-2013/063832
- WO-A2-2007/092687
- US-A1- 2003 202 490
- US-A1- 2009 080 384
- US-A1- 2010 261 493
- FENG M ET AL: "Uplink Adaptive Resource Allocation Mitigating Inter-Cell Interference Fluctuation for Future Cellular Systems", PROCEEDINGS OF THE 2007 IEEE INTERNATIONAL CONFERENCE ON COMMUNICATIONS (ICC 2007), 24-28 JUNE 2007, GLASGOW, UK, IEEE, PISCATAWAY, NJ, USA, 28 June 2007 (2007-06-28), pages 5519-5524, XP031126548, ISBN: 978-1-4244-0353-0

## Description

### TECHNICAL FIELD

The present invention relates to wireless networks and, more specifically, to congested scenarios in uplink in wireless networks.

### STATE OF THE ART

In most crowded events, both planned and unplanned, 3G users experience severe limitations in uplink in terms of accessibility and throughput (typically around 20/32 kbps or even less). In fact, speed-test applications have measured 0 kbps in some operator networks during crowded events, despite having sufficient cells covering the events.

The uplink cell capacity is greatly reduced (typically below 500 kbps) due mainly to two reasons: to the large amount of RRC (*Radio Resource Control*) requests (e.g. 5,000-30,000 requests in such events registered every 15 minutes) and to the noise from intra-frequency, inter-frequency neighbour cells and external sources. In 3G networks, cells frequently overlap: typically around 30% calls are in soft handover. Currently there is no coordination between intra-frequency cells (intra-Node B or inter-Node B) in the Node B scheduler in order to minimize interference created to neighbour cells.

In power control (3GPP TS 25.214) some level of coordination is currently done for intra-Node B scenarios in order to provide a single TPC (*Transmitter Power Control*) command for the uplink power control. This is useful to ensure that the relevant control channel power is used. However, this does not allow coordinating data transmissions efficiently on the user plane (HSUPA data channel, called E-DPDCH).

On the other hand, 3GPP allows time division scheduling, which is currently deployed in 3G networks. This is a good solution to control the transmission of users within a given cell. However, the time division scheduling is only applicable to HSUPA users with TTI= 2ms (*Transmission Time Interval* = 2 milliseconds) but it is not applicable in SHO (*Soft Handover*) due to timing issues (because it is not possible to synchronize the uplink transmissions for the different cells in the active set). In cells covering a crowded event, 2 ms TTI is typically deactivated to make sure that all HSUPA users use 10 ms TTI in order to reduce the overhead of the E-DPCCH control channel, which is higher for 2ms TTI.

United States patent application number US2013/0121186A1 discloses a method for reducing interference in uplink in a wireless network. In order to achieve it, some coordination between neighbouring cells is established. The method is based on the selection of users causing high levels of interference. This selection is made by monitoring UE pilot signals. Coordination between neighbouring cells occurs because a first cell transmits a pilot signal of a UE in a first group to a second cell (e.g. a small cell). The second cell monitors the pilot signal of the first UEs and determines if one or more of the first UEs are causing uplink interference to the second cell, based on the monitored pilot signal. Uplink pre-scheduling information is then transmitted for the UE in the first group which is capable of causing high uplink interference to the second cell. The second cell can then schedule to that UE based on pre-uplink information to reduce the effect of interference when the actual uplink occurs.

US-2003/202490 relates to centralised load control at the radio network in order to control uplink interference in a cell, while at the same time permitting adaptation to fast channel variations.

"Uplink Adaptive Resource Allocation Mitigating Inter-Cell Interference Fluctuation for Future Cellular Systems", Feng, Proceedings of the 2007 IEEE International Conference on Communications (ICC 2007), pages 5519-5524, concerns the problem of inter-cell interference fluctuation, inherent on the uplink direction of cellular systems employing OFDMA or single carrier as multiple access technology. An adaptive resource allocation algorithm based on inter-cell interference measurement is proposed to achieve both multiuser diversity gain and cancellation of inter-cell interference fluctuation.

### DESCRIPTION OF THE INVENTION

It is therefore an object of the invention to provide a method for alleviating interference in uplink in a 3G network, which overcomes the current limitations associated to using pilot signals.

According to an aspect of the present invention, there is provided a method for controlling uplink congestion in a wireless network in accordance with claim 1. The method comprises: detecting congestion in uplink in at least one cell of a cluster of cells within the wireless network; in response to that detection, dividing user devices of the cluster of cells into a plurality of groups, wherein that division is done according to one or more technical criteria; assigning an uplink transmission schedule to at least one of the plurality of groups, the transmission schedule being based on a characteristic of the corresponding group.

In a particular embodiment, the step of assigning an uplink transmission schedule comprises allocating a time interval to each group.

In another particular embodiment, the uplink transmission schedule is further assigned per cell of the cluster of cells. More particularly, the assignment comprises assigning time intervals to each cell of the cluster of cells, and wherein each time interval within a cell is further assigned to at least one group of the plurality of groups.

In a particular embodiment, the uplink transmission schedule is on a rotational basis among groups.

The one or more technical criteria for dividing user devices are based at least one of the following parameters: whether or not user devices are in soft or softer handover; pathloss (measured for example via CPICH RSCP in 3G) or relative distance of each user device to its corresponding serving node B; satisfaction of the user devices with respect to the allocated resources; measurements of the transmitted power by a user device; a threshold based on Ec/No or RSCP obtained from soft or softer handover settings in the network; SIR or SIR error; positioning measurements.

In a particular embodiment, congestion in the at least one cell is determined according to at least one of the following criteria: : the number of user devices which has been assigned a dedicated physical channel being above a certain threshold, the noise level being above a certain threshold, the number of cell_DCH connected users being above a certain threshold, the number of cell_DCH active users being above a certain threshold, the number of FACH users in the cell being above a certain threshold, the noise level (RTWP) being above a certain threshold, the code and power level in the downlink and the not met accessibility KPI's.

In a particular embodiment, the cluster of cells is formed by the at least one congested cell and at least one additional intra-frequency cell among its neighbour cells. In particular, the cluster of cells is established according to at least one of the following criteria: the cluster is formed by the neighbour cells of the detected congested cell; the cluster is formed by cells having user devices in soft or softer handover with the detected congested cell; the cluster is formed by the cells of the neighbour cells of the detected congested cell which have user devices in soft or softer handover with the detected congested cell; the cluster is formed as follows: once a cell has been identified as congested following a certain criterion, checking whether the neighbour cells are also congested, according to the same criterion or to a different one; a criterion based on historical statistics from the network.

The characteristic of a corresponding group is the type of group and optionally may be a priority of transmission or a power requirement. For example, if there are two groups (Group_1 and Group_2), the characteristic can be whether it is Group_1 or Group_2, in such a way that once the two groups have been decided, different schedules can be assigned to each group.

According to another aspect of the invention, a network entity is provided in line with claim 11. It comprises:
a detector configured for detecting congestion in uplink in at least one cell of a cluster of cells within a wireless network; means for dividing, in response to that detection, user devices of the cluster of cells into a plurality of groups, wherein the division is done according to one or more technical criteria; a scheduler for assigning an uplink transmission schedule to each of the plurality of groups, the transmission schedule being based on the type of the corresponding group.

The network entity is preferably either a RNC, in which case the cells belonging to the cluster of cells are cells being served by at least two node Bs, or a node B, in which case the cells belonging to the cluster of cells are cells being served by one single node B.

Preferably, the wireless network is a 3G wireless network.

According to a final aspect of the invention, a computer program is provided, comprising computer program code means adapted to perform the steps of the method previously described when the program is run on a computer, a digital signal processor, a field-programmable gate array, an application-specific integrated circuit, a micro-processor, a micro-controller, or any other form of programmable hardware.

Additional advantages and features of the invention will become apparent from the detail description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows an example of a mobile communication system, in which three node Bs with several sectors (cells) are illustrated.
Figure 2 shows a scheme illustrating the principle of the scheduler resource allocation of the invention, in which the user devices of a cluster of cells are divided into groups.
Figures 3A and 3B show respective schemes illustrating the principle of the scheduler resource allocation of the invention, in which the user devices of each cell of a cluster of cells are divided into groups.
Figure 4 shows a scheme illustrating a possible embodiment of the scheduler resource allocation, which is based on soft handover-related criteria.
Figure 5 shows a scheme illustrating a possible embodiment of the scheduler resource allocation, which is based on distance or pathloss.

### DESCRIPTION OF A WAY OF CARRYING OUT THE INVENTION

In this text, the term "comprises" and its derivations (such as "comprising", etc.) should not be understood in an excluding sense, that is, these terms should not be interpreted as excluding the possibility that what is described and defined may include further elements, steps, etc.

In the context of the present invention, the term "approximately" and terms of its family (such as "approximate", etc.) should be understood as indicating values very near to those which accompany the aforementioned term. That is to say, a deviation within reasonable limits from an exact value should be accepted, because a skilled person in the art will understand that such a deviation from the values indicated is inevitable due to measurement inaccuracies, etc. The same applies to the terms "about" and "around" and "substantially".

The following description is not to be taken in a limiting sense but is given solely for the purpose of describing the broad principles of the invention. Next embodiments of the invention will be described by way of example, with reference to the above-mentioned drawings showing apparatuses and results according to the invention.

The present invention is applicable to wireless networks. In a particular embodiment, it is applicable to 3G wireless networks. The term "3G" refers to UMTS/WCDMA and includes HSDPA (*High Speed Downlink Packet Access*) (also referred to as 3.5G, 3G+ or mini 3G); HSUPA (*High-Speed Uplink PacketAccess*) and HSPA+.

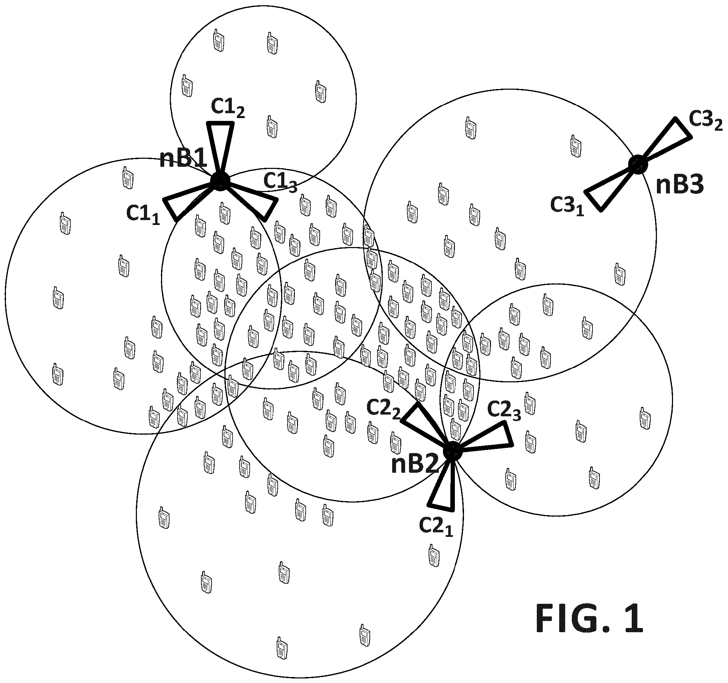

Figure 1 shows a wireless communication network which includes a number of node Bs (nB1 nB2 nB3) and other network entities (not illustrated). A node B is an entity which communicates with the user equipment (UE), provides communication coverage for a particular area and may support communication for the UE located within its coverage area. The user equipments (UE) are also referred to as users, user devices, mobile stations, mobile terminals or access terminals. Figure 1 shows a plurality of user devices under the coverage area of the node Bs (nB1 nB2 nB3). Non-limiting examples of user devices are cellular phones, smart phones, tablets, personal digital assistants (PDAs), laptop computers and wireless modems. In 3GPP, the term "cell" refers to a coverage area of a node B. In general, a node B may support one or multiple cells. In figure 1, the first node B nB1 has three sectors or cells c1₁ c1₂ c1₃, the second node B nB2 has three sectors or cells c2₁ c2₂ c2₃ and the third node B nB3 has two sectors or cells c3₁ c3₂. A group of node Bs is coupled to a Radio Network Controller (RNC), not illustrated in figure 1. 3G uses Wideband Code Division Multiple Access (WCDMA) on both downlink and uplink. Uplink transmission is continuous for control channels, such as DPCCH. However, for HSUPA the E-DPDCH data channel is transmitted only when there is data in the buffer and a suitable grant from the serving cell. In figure 1, all the cells c1₁ c1₂ c1₃ C2₁ c2₂ c2₃ c3₁ c3₂ work at a same carrier frequency (either intra Node B or inter Node B). In other words, they are intra-frequency cells.

The scheme of figure 1 tries to represent in a simplified manner a crowded event. A large amount of user devices are within the coverage area of the three node Bs, namely nB1, nB2 and nB3. In particular, a large amount of user devices are cell edge users, that is to say, are simultaneously under the coverage area of several cells, either of a single node B (intra node B) or of different node Bs (inter node Bs). For example, it can be appreciated that several user devices are simultaneously under the coverage area of c1₃, c3₁ and c2₂, or that some user devices are simultaneously under the coverage area of c2₃, c3₁ and c2₂, and so on. For example in HSUPA, all users are sharing the same resources, which are basically power/noise. The Node B scheduler has a power/noise budget to play with (typically called RoT target, Rise over Thermal target) e.g. 10 dB. If there is a lot of external noise (e.g. noise from neighbours) the useful budget is reduced (e.g instead of the 10 dB RoT target, there is only 2dB real RoT budget for the serving cell) due to the interference. Although time multiplexing could be used also to separate the users in different times (in TTI units, i.e. multiple of 2 ms), in HSUPA it is limited to 2 ms TTI, therefore not applicable to 10 ms TTI. Besides, it would require more signalling on the DL to indicate all time which user is allowed to transmit.

The inventive method is triggered when a network event, e.g. congestion detected in at least one cell, is realised by an upper level entity (which, depending of the entities involved, can be a RNC or a node B). Possible ways for defining congestion within a cell or group of cells are explained later.

When an event with attendance of massive concentration of terminals (e.g. smartphones) occurs, congestion over a cluster of cells can take place. Under these circumstances, uplink congestion can be controlled by alleviating interference in uplink by isolating the cell edge users who are creating more interference. This is achieved by coordinating the uplink scheduler transmission between cells. In comparison to the method proposed in US2013/0121186A1, which is based on the selection of high interference users using pilot signals, the inventive scheme relies on other network specific information (e.g. SHO status, CPICH Received Signal Code Power (RSCP) level) (rather than to pilot signals).

First, congestion in uplink over at least one cell of a cluster of cells is detected by the RNC or the node B. It is remarked that the node B can also detect congestion, since it has the visibility of the number of users and effective noise/RoT. However, the RNC needs to be aware thereof, since the congestion and admission control are managed at RNC level (e.g. admitting/rejecting new RRC request or new call request). The determination of congestion can be done according to different criteria. In a possible embodiment, one cell is considered to be congested if the number of connected users in that cell is above a certain threshold (for example, above 50 users in cell_DCH with an HSPA RAB (*High Speed Packet Access Radio Access Bearer*); in other words, when more than 50 users have assigned a dedicated physical channel in uplink and downlink). It is remarked that "users connected in a cell" refer to users RRC connected. The cell can be a serving cell or a non-serving cell. Another criterion to decide that a cell is congested is the noise level being above a certain threshold (for example, above -90 dBm). In another criterion, both thresholds are taken into account. Non-limiting examples of other possible criteria are: the number of cell_DCH connected users, the number of cell_DCH active users, the number of FACH users in the cell, the noise level (RTWP), the code and power level in the downlink and accessibility KPI's not met (e.g. call blocking, call drop).

The cluster of cells is created by the RNC, because, in comparison to the node B, it has full view of the different cells. Alternatively, the cluster can be created by an external entity located outside the RAN. The cluster of cells is preferably formed by the at least one congested cell and at least one additional intra-frequency cell among its neighbour cells. The cells which form the cluster of cells work at the same carrier frequency (intra-frequency cells). There are different criteria for grouping cells in a cluster of cells. One possible way of establishing which cells belong to the cluster of cells is the selection of all the intra-frequency neighbour cells of the detected congested cell. This selection is straightforward, because this information can be extracted from the intra-frequency neighbor cell list configured by the operator. Another possible way of establishing which cells belong to the cluster of cells is the selection of the cells which have user equipment in soft or softer handover with the detected congested cell. It is also possible to combine both requirements. That is to say, the cluster of cells can be formed by the cells with at the same time are intra-frequency neighbour cells of the detected congested cell and have user devices in soft or softer handover with the detected congested cell. Another possible way of establishing which cells belong to the cluster of cells is, once a cell has been identified as congested (for example because the number of users which have been assigned a dedicated physical channel in uplink and downlink is above a certain threshold), checking whether the intra-frequency neighbour cells are also congested (according to the same criterion or to a different one). The threshold considered in this case does not need to be the same one as for the serving cell (for example, 20 users for serving cell and 10 users for a neighbour cell to be considered as "useful" in coordination). Another way of establishing which cells belong to the cluster of cells is by using historical statistics from the network to derive whether the intra-frequency neighbour cells are likely to be useful to coordinate.

Under such congestion, one efficient way to allocate user plane resources is to allow data transmission only to a limited number of users at the same time; this applies in particular to the users causing or contributing to congestion. This can be done with a scheduler grant rotation scheme managed by the RNC. In this case, the RNC defines the pattern to be used to avoid collision of transmission of cell edge users from different cells. It is remarked that the RNC is needed if cells are from different Node B's (if it is needed to coordinate cells located within a Node B, the Node B can do it on its own without the RNC). The Node B then receives the pattern and executes the user grant rotation.

So, in response to the detection of congestion in uplink in at least one cell of the cluster of cells, the user devices of the cluster are divided into a plurality of groups. The division is done according to one or more technical criteria. Examples of such technical criteria are measurements of the transmission power (i.e., if less than a threshold then the user device is at the edge, if above it is not at the edge), whether or not user devices are in soft or softer handover, and others that will be explained in detail later. Next an uplink transmission schedule is assigned to at least one of the plurality of groups. The transmission schedule is based on a characteristic of the corresponding group. This assignment can be done by the RNC (in a general case) or by the node B (in the specific intra-node B case, that is to say, when no other node B is involved in the coordination). Non-limiting examples of a characteristic of a corresponding group are a priority of transmission, a power requirement or the type of group. For example, if a first group is G1 and a second group is G2, the "characteristic" (it his case, the "type") can be whether it is group G1 or group G2. In other words, the corresponding network entity can decide "if group is G1, then it gets schedule A", while "if group is G2, then it gets schedule B". The type of the group can also be, for example, "cell edge group" or "not cell edge group". In another example, if the technical criterion for dividing users into groups is whether or not the transmission power is above a threshold, then the group types can be: "group of user devices with higher capacity" and "group of user devices with lower capacity".

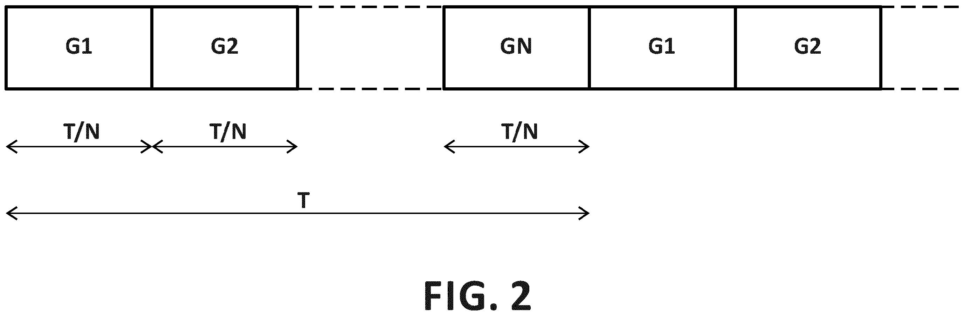

Figure 2 shows a possible implementation of the division of user devices into groups G1 G2... GN. Then, an uplink transmission schedule can be assigned to each group based on a characteristic of that group. For example, group G1 can be given a first schedule, group G2 can be given a second schedule, and so on.

In a particular embodiment, the assignation of an uplink transmission schedule comprises allocating a time interval to each group. In the example of figure 2, the user devices have been divided into N groups and the transmission schedule (transmission opportunity pattern) is a time interval (T/N) assigned to each group. In this particular example, the uplink transmission schedule is on a rotational basis. This means that each of the N groups receives the time internal T/N once every T time units, or in other words, when all the groups have received the time interval once. In a minimum configuration, the whole set of users (of the cluster of cells) is divided into two groups. In non-minimum configurations, the whole set of users is divided into several (more than two) groups, as will be explained later. In any case, at least one of the groups is formed by users contributing to congestion, while at least one of the groups is formed by users not contributing to congestion.

The idea is to select at least the user devices with highest contribution to congestion. The users which contribute to congestion are normally cell edge users. The goal is to be able to avoid collision of cell edge transmissions between neighbour cells. These user devices could for example be grouped in a first group G1. There are many criteria to define the transmission opportunity pattern. In a possible embodiment, when a time interval T/N is assigned to this first group G1, this means that all users -including cell edge users of group N- can transmit; while in the N-1 remaining time intervals T/N, all users in the cluster except the cell edge users (which are grouped in G1) can transmit. In other words, users in good radio conditions (with less contribution to the uplink congestion) are allowed to transmit all the time as their interference to neighbour cells noise should be low.

In a different embodiment, the transmission opportunity pattern is defined so as to not only restrict transmission to users causing congestion, but also restrict transmission to users in good radio conditions.

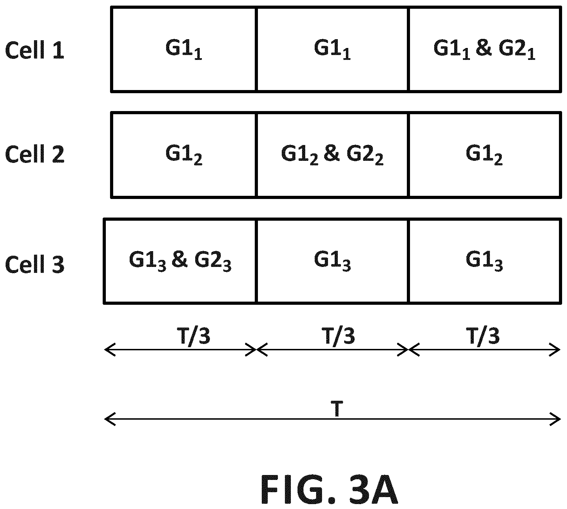

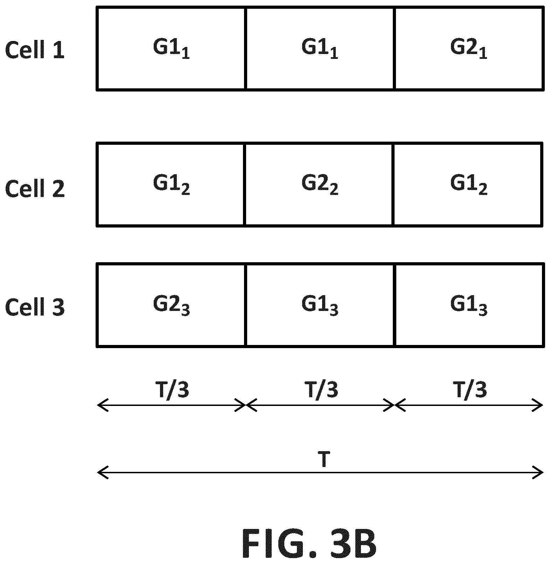

Figures 3A and 3B show a particular embodiment of the invention, in which the uplink transmission schedule is further assigned per cell of the cluster of cells. Figures 3A and 3B show respective block diagrams representing how the user devices of each cell are divided into different groups G1 G2... GN (in figures 3A and 3B, N=2).

In a more particular embodiment, the "per cell" assignment of the uplink transmission schedule is based on assigning a time interval to each of the cells. These time intervals represent the time period in which each corresponding cell is allowed to allocate transmission resources to at least one of the plurality of groups.

Two different uplink transmission schedules assigned to each of the groups in each cell are also shown. In figures 3A-3B a simplified situation has been exemplified. The cluster of cells is formed by three cells (Cell 1 Cell 2 Cell 3). The user devices of the cluster of cells have been divided into two groups: a first group of users G1 formed by users that do not cause or do not significantly contribute to congestion; and a second group of users G2 formed by users that cause or significantly contribute to congestion. Two possible criteria for assigning users to one or another group, are explained later.

Figures 3A-3B shows three sequences of transmission (one per cell). The RNC sends (assigns) each node B (if more than one node B is involved in these three cells) a table or sequence of transmission that each node B has to send to its cells. The transmission sequences (tables) can be exchanged between RNC and Node B in a proprietary way. Like in the general embodiment described with reference to figure 2, when designing the transmission opportunity pattern and strategy, it can be established that users in good radio conditions can always transmit. In that case, the restriction in resources only affects the users in worse radio conditions (normally, cell edge users). This is represented in figure 3A. Alternatively, it can be established that the restrictions not only affect the users having worse radio conditions, but also users in good radio conditions. This is represented in figure 3B.

According to the first strategy, illustrated in figure 3A, if G1 is the group of users having good radio conditions and G2 is the group of users having worse radio conditions, the restriction only affects cell edge users G2ᵢ (i being the cell number, i=1, 2 or 3), while users in good radio conditions G1ᵢ can always transmit. In other words: Cell 1 receives a sequence of transmission which indicates that considering a period for transmission of T seconds, the users being served by this cell (Cell 1) belonging to the second group of users G2, are only allowed to transmit during the third sub-period T/3. It is remarked that G2₁ refers to users of the second group (G2) which are served by cell 1. The sequence of transmission of cell 1 also indicates that during the two first sub-periods T/3, only the users being served by this cell (Cell 1) belonging to the first group of users G1 are allowed to transmit. In fact, these users G1₁ have no restriction of resources (in terms of time assigned to having allocated resources). In turn, cell 2 receives a sequence of transmission which indicates that in a period for transmission of T seconds, the users being served by this cell (Cell 2) belonging to the second group of users G2 (G2₂), are only allowed to transmit during the second sub-period T/3. The sequence of transmission assigned to cell 2 also indicates that during the first and third sub-periods T/3, only the users being served by this cell (Cell 2) belonging to the first group of users G1 are allowed to transmit (G1₂). In fact, these users G1₂ have no restriction of resources (in terms of time assigned to having allocated resources). Finally, cell 3 receives a sequence of transmission which indicates that in a period for transmission of T seconds, the users being served by this cell (Cell 3) belonging to the second group of users G2 (G2₃), are only allowed to transmit during the first sub-period T/3. During the second and third sub-periods T/3, only the users being served by this cell (Cell 3) belonging to the first group of users G1 are allowed to transmit (G1₃). In fact, these users G1₃ have no restriction of resources (in terms of time assigned to having allocated resources).

According to the second strategy, illustrated in figure 3B, if G1 is the group of users having good radio conditions and G2 is the group of users having worse radio conditions, when referring to each cell, G1ᵢ (i being the cell number, i= 1, 2 or 3) means that only users in group G1 can transmit, while G2ᵢ means that only users in group G2 can transmit. In other words, the restriction affects all users. Although in the particular implementation of figure 3B, users in good radio conditions are allocated two sub-periods T/3, while cell edge users are allocated one sub-period T/3.

In sum, thanks to this scheduler resource scheme, which in this particular example is a rotation scheme, less parallel (simultaneous) transmissions occur, thus allowing reducing interference between users and increasing payload to be transmitted to each user. The rotation of the scheduler resource is coordinated within the Node B (intra-Node B case, softer handover) and between Node B's (inter-Node B case, soft handover) when a cell or a number of cells are in congested mode in a cluster.

Referring back to the criteria for creating the cluster of cells, it is possible that some neighbour cells in a cluster might not all be in congested mode at the same time. However, users in non-congested cells could still harm neighbour cells with high power transmissions. That is why it is important to be able to act upon these users and also reduce their grant of resources. The inventive method therefore applies to scenarios with neighbour cells with mixed congestion status.

If there are more cells to be coordinated than overlapping sequences, cells are prioritised. In a preferred embodiment, they are prioritised according to a ranking (nonoverlapping sequences applied preferably on cells with highest likelihood of co-interference occurrence).

Next, the different possibilities to create groups and to assign users to groups are explained.

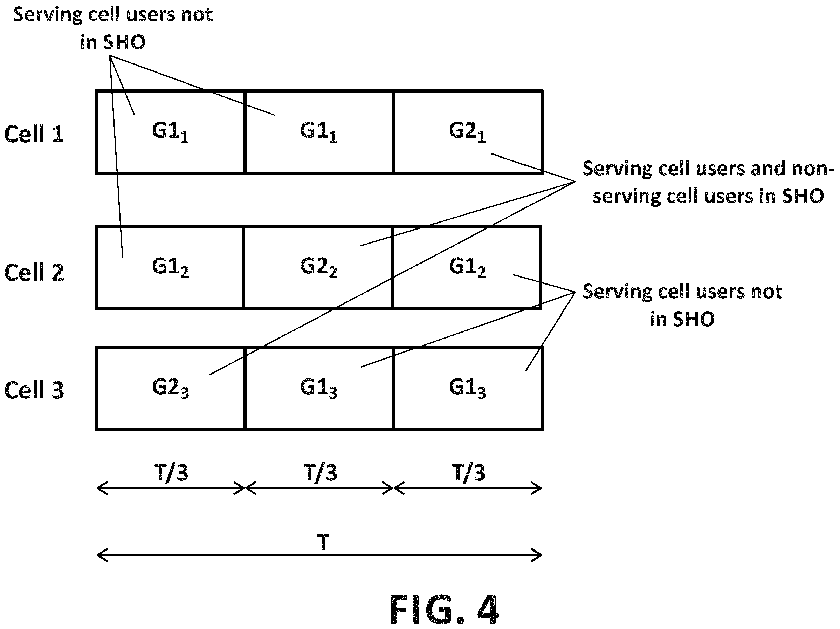

In a first possible embodiment, represented in figure 4, , the RNC (or Node B in specific cases) creates two different scheduling groups. A first group G₁ includes the users which are not in SHO, that is to say, users with a single radio link. A second group G₂ includes the users which are in SHO, that is to say, users connected to at least two different cells with at least 2 radio links. In order to minimise interference the aim is therefore to avoid neighbour cells (in the same carrier frequency) to schedule G2 users simultaneously (in the preferred strategy, G1 users can be allocated resources without specific constraints). For example with cell 1 cell 2 and cell 3 being intra-frequency neighbour cells, using the following sequence: G1-G1-G2 in cell 1 and G1-G2-G1 in cell 2 and G2-G1-G1 in cell 3, the method ensures that congestion is minimized. G1 means that the users in this group have a non-zero serving grant (that is to say, that they are always allowed to transmit; all the periods are 'ON') whilst users in the other group G2 have zero or a low serving grant for some sub-periods of time (some periods are 'OFF' or have a very low grant (for example 32 kbps instead of 0 kbps)), as depicted in figure 3. The subscript indicates the cell number. For users in G2 group, Absolute Grants are preferably used for the serving cell users to configure the relevant serving grant during the ON period. For users for which the cell is not the serving cell only DOWN command (reducing power grant of the user) using E-RGCH can be transmitted (relative grant). However, if the scheme is applied over a cluster of cells, the serving cell for these users is likely to be inside, so an Absolute Grant should have set it to zero grant. The Node B scheduler is aware of the serving cell status for all the HSUPA users so it can derive the serving cell and non-serving cell users.

Depending on the number of cells, the sequences of transmission can become complex. To avoid collisions between transmissions of users belonging to the second group G2, several alternatives are possible:
- Planning of sequences per cell, either manually or automatically, for example using a cell specific parameter defining the pattern sequence of scheduling groups. This is done at RNC level or at SON level if done by an entity outside the RAN.
- Randomisation of scheduling groups: each cell selects autonomously the pattern sequences to reduce collisions. This is preferably done at RNC level.
- OSS or RNC based selection algorithm defining non overlapping pattern sequences for intra-frequency neighbour cells when activating the scheduling rotation in a cluster of intra-frequency cells.

According to a less preferred strategy, both users being in SHO and users not being in SHO are affected by the restrictions in the allocation of resources, which are only allocated under the scheduling approach.

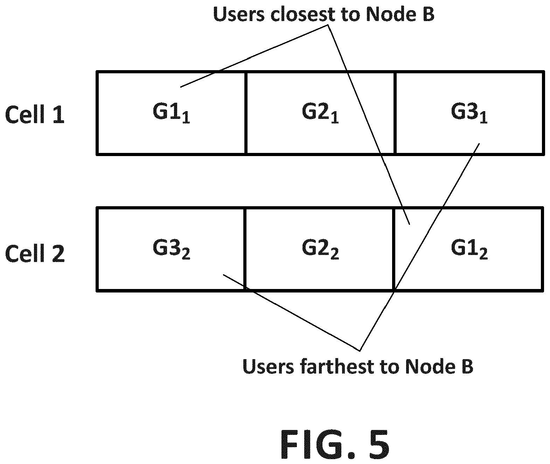

In a second possible embodiment, represented in figure 5, the technical criterion for dividing user devices into groups is based on the pathloss or relative distance of each user device to its corresponding serving node B. The grant of resources for users contributing to congestion can then be scheduled/ coordinated according to a distance-based scheme. In this embodiment, when performing the scheduling grant scheme (preferably rotation scheme) the Node B takes into account a collision avoidance algorithm, to ensure that users having highest power consumption due to pathloss or to distance in neighbour cells, do not transmit at the same time. In other words, the relative distance of each UE to the node B which serves the cell being the serving cell for said US is taken into account.

The scheme is based on the fact that, the further away a user is from the Node B, the higher is its transmission power- especially when the user is active and has a large amount of data waiting to be transmitted. Hence, it is very important to control the transmission of these users, in order to minimise its impact in terms of interference in congestion situations.

The possible particular implementations of the distance-based scheme follows the same principles as described in relation to the first embodiment (in which the criterion is the users being in Soft or Softer Handover (SHO) or not), but instead of using SHO as a criterion for the distributing users into groups, distance is used as a criterion. The distance criterion can either use CPICH RSCP (common pilot channel received signal code power) measurements reported to the RNC to estimate the distance based on pathloss call, or use UE Power Headroom (UPH) measurements reported to the Node B. UPH measurements allow to have an estimate of the distance based on the power consumed by the user just to transmit its control channels compared to other users. The UPH measurements are reported by the user equipment to the node B. The advantage with respect to the CPICH RSCP is that this is reported frequently to the Node B.

Distances are relative in a cell. For example, in an event held in a stadium, the distance between the user equipment and the antenna of the node B might be low and at the same time, classified as high relative distance (group G3), if that user equipment is the most remote from the antenna compared to other users in the cell. The Node B can perform this classification.

In this embodiment, the RNC creates a number of N scheduling groups G1 G2 ... GN, classified based on distance range. G1 refers to users within the cluster of cells having minimum relative distance to Node B (for example having high UPH). The first group G1 is therefore formed by the users that do not cause or do not significantly contribute to congestion. GN refers to users within the cluster of cells having maximum relative distance to Node B (for example having low UPH). The last group of users GN is formed by users with highest contribution to congestion. The complexity of the sequences of transmission depends on the number of groups into which users are divided and on the number of cells belonging to the cluster of cells. For example, if there are M cells in the cluster of cells, a grant rotation period T can be divided into M time intervals, in such a way that each cell (Cell 1 Cell 2 ... Cell M) is assigned a grant rotation portion or time interval whose duration is T/M. According to a preferred strategy, users belonging to group G1 can transmit at any time, but users belonging to group N GN can only transmit when the cell which serves them has been allocated the corresponding time-slot. Different categories can be established for the remaining groups (G2... G(N-1)): for example, some of or all these groups are always allowed to transmit (like G1), that is to say, only cell edge users (GN) cannot transmit at any time. In another example, users in G2 ... GN are allowed to transmit for T/M seconds every T seconds. According to another strategy, all users, including those in group G1, are allowed to transmit during T/M seconds (for example rotation every 20 ms). In any embodiment, instead of totally denying transmission resources to the users of a certain group, those resources are instead reduced to a minimum grant (for example, 32 kbps).

Figure 5 shows a particular example of this embodiment, in which the whole set of users under the coverage area of a cluster of cells is divided into N=3 groups G1 G2 G3. The first group G1 refers to users with minimum relative distance to Node B (for example high UPH). The second group G2 refers to users with medium relative distance to Node B (for example medium UPH). And the third group G3 refers to users with high relative distance to Node B (for example low UPH). In order to minimise interference the aim is therefore to avoid neighbour cells (in the same carrier frequency) to schedule G3 users simultaneously (G1 users can be allocated resources without specific constraints). In the example of figure 5, with cell 1 and cell 2 being intra-frequency neighbour cells, the following sequence can be used: G1-G2-G3 in cell 1 and G3-G2-G1 in cell 2. With these sequences, the method guarantees that congestion is minimized. The subscript indicates the cell number.

In an alternative implementation, covered by the general embodiment of figure 2, a complete ranking of users within the cluster of cells according to distance/pathloss is created. From that ranking of users according to distance, a classification is built to distinguish groups of users G1 G2... GN. Users in a group GN with lowest ranking (normalised number of users) are not scheduled simultaneously in neighbour cells. The ranking of users can also be established per cell within a group.

The same techniques as proposed in the first embodiment (planning of sequences per cell; Randomisation of scheduling groups; and OSS or RNC based selection algorithm) can be used to avoid collisions between users in group GN (for example, G3 (N=3)).

In a third possible embodiment, not illustrated, the criterion for dividing user devices into groups is based on the satisfaction of the user devices with respect to the allocated resources; in a particular embodiment, grant of resources is coordinated according to the status of a happy-unhappy bit, that is to say, according to the information derived from the user device as to whether enough resources have been allocated to it (in other words, according to the quality of services detected by the UEs). As part of the uplink scheduling information which is signalled at MAC level to the Node B, for example HSUPA users report a happy bit (or unhappy bit) which indicates whether the user is being allocated or not enough resources by the scheduler according to its needs. In this embodiment, the information provided by this happy bit, preferably together with the status of the user buffer (that is to say, whether the buffer is overload or not, etc.), is used to ensure that unhappy users are not served simultaneously in neighbour cells and that unhappy users are served frequently enough. In this embodiment, a number of scheduling groups G1 G2 ... GN is created, classified based on the status of the "happy user" bit.

In a particular implementation, four groups are created. A first group G1 refers to users being "happy users" as expressed by the status of the "happy user" bit. A second group G2 refers to users being "unhappy users" as expressed by the status of the "happy user" bit, but which have been "unhappy" for a time period shorter than a certain threshold "*unhappy_1_threshod*". A third group G3 refers to users being "unhappy users" as expressed by the status of the "happy user" bit, but which have been "unhappy" for a time period longer than said first threshold "*unhappy_1_threshod*" and shorter than a second threshold "*unhappy_2_threshod*". A fourth groups G4 refers to users being "unhappy users" as expressed by the status of the "happy user" bit, which have been "unhappy" for a time period longer than said second threshold "*unhappy_2_threshod*". Users in group G4 should preferably be moved to cell_FACH.

In a fourth possible embodiment, not illustrated, the technical criterion for dividing user devices into groups is based on measurements of the transmitted power by a user device. Grant of resources can then be coordinated according to the UE transmitted power, in which the measurement is made by the UE. This measurement can be reported to the RNC either in event-based basis or in periodic basis. The measurement of the transmitted power allows to identify users causing most interference in a cell, amongst which cell edge users could be selected.

In a fifth possible embodiment, not illustrated, the technical criterion for dividing user devices into groups is based on a threshold based on Ec/No or RSCP obtained from soft or softer handover settings in the network. Grant of resources can then be coordinated according to an independent threshold based on Ec/No or RSCP obtained from soft/softer handover settings in the network (i.e. settings specific to the algorithm). Soft/Softer handover settings allow to setup RSCP and/or Ec/No thresholds to trigger addition/deletion of one link from the radio link set. The advantage of using this criterion is, from the point of view of the coordination algorithm, that using independent settings provides more flexibility. For example, if the network settings of a certain network allow to add a cell to the active set (what implies having more cells in SHO) only when it is 4 dB above the best server, from a coordination point of view it would be better to coordinate a user device when it is 4 dB below the pathloss of the serving cell (cell received with lower level, but still relevant in terms of interference contribution). The measurement report comes from the UE but it is the network based on this measurement which decides to add one cell to the active set (more cells in SHO). This for SHO but for combining the window is a bit different, for SHO you consider a new cell when it becomes bigger than the serving cell, but for coordinating cells it makes sense to consider a new cell before this e.g. when the cell is having a pathloss to the UE within -4 dB range of the pahloss of the serving cell (cell received with inferior level, but still relevant in terms of interference contribution). It is therefore interesting to use the same criterion as soft handover (i.e. CPICH RSCP and/or CPICH Ec/No), but not be tied to the SHO settings from the network. It is possible to combine different criteria, for example to use the SHO criterion and the pathloss one altogether. For example, cell edge users can be categorised as users in SHO and/or users with RSCP level below -100 dBm (or an equivalent pathloss). Similarly, the pathloss approach and the happy bit approach can be combined (for example, users with RSCP level below -100 dBm and at the same time unhappy).

In a sixth possible embodiment, not illustrated, the technical criterion for dividing user devices into groups is based on SIR or SIR error. Grant of resources can then be coordinated according to a SIR or SIR error criterion. The node B measures the SIR and/or SIR error and reports them to the RNC. This criterion allows identifying users with "problems" (power control not converging correctly). In most likely cases, the problematic users are cell edge users.

In a seventh possible embodiment, not illustrated, the technical criterion for dividing user devices into groups is based on positioning measurements. Grant of resources can then be coordinated according to positioning measurements which can be reported to the RNC. Non-limiting examples of such measurements are: (a) UE Tx-Rx time difference (measurement made by the UE; the measurement can be reported to the RNC either in event-based basis or in periodic basis; this measurement allows deriving a distance from the serving cell; therefore, a threshold can be used to consider a user as cell edge user or not. (b) GPS measurements, which can be reported to the RNC via an application (RNC and UE need to have a peer application from the vendor to exchange position info). This embodiment can be seen as a particular embodiment of the distance based criterion.

Finally, some of the former schemes can be combined, in order to optimize the grant of resources in the uplink. In a non-limiting example, grant of resources is scheduled/ coordinated for users in Soft Handover or in Softer Handover (SHO) combined with users having unhappy bit.

As apparent from the content of this description, the method offers a solution to the problem of assigning resources in uplink under conditions of severe congestion.

Next, an example of a scheduling algorithm is described. This example should not be interpreted in a limiting way, but simply with illustration purposes.

First (step 1), the RNC detects overload in one or more cells according to a defined criterion (e.g. the number of active HSUPA users in a cell of the cluster is above a threshold of 10 and the noise level is above -90 dBm).

Next (step 2), for each of the cells where overload was detected:
a. The load in intra-frequency neighbour cells part of the neighbour cell list is monitored.
b. If load according to a given criterion is above a certain threshold (e.g. number of active HSUPA users above a threshold=5 and noise level above -95 dBm) then, these neighbour cells are considered as part of the group of cells over which the coordination algorithm is applied.
   i. If the neighbour cell also meets the overload criterion/criteria (step 1), then they are placed together in the same group of cells to be coordinated.
c. A ranking of users is established. The ranking can be performed per cell within the group e.g. using the number of instances the cell is reported by users as cell susceptible to enter active set.
   i. If CPICH RSCP measurements are available, these measurements are preferably used for the ranking.

Then (step 3), for each group of cells to be coordinated, the RNC applies a nonoverlapping sequence of uplink transmission for cell edge users (that is to say, for the users which most contribute to congestion).
a) A transmission opportunity ratio for cell edge users is defined (e.g. 1 opportunity every 4 groups (25% or resources)).
b) A sequence of transmission is assigned to the group of neighbour cells over which the coordination is performed.
   a. If there are more cells to be coordinated than overlapping sequences, cells are prioritised according to ranking (nonoverlapping sequences applied preferably on cells with highest likelihood of co-interference occurrence).

Finally (step 4), when load in the overloaded cells has decreased to a certain threshold (e.g. number of active HSUPA users below 5 and noise level below -95 dBm), then the coordination at RNC level is stopped.

A similar algorithm can be performed at Node B level instead of at RNC level when overload occurs with different intra-frequency cells of the same Node B. In that case, either the operator chooses to execute coordination only at Node B level (e.g. a stadium scenario with 1 Node B containing a large number of intra-frequency cells) or to have two levels of coordination, RNC and Node B level, with RNC leading the coordination. In the latter case, the Node B follows the sequences assigned for each cell by the RNC, but can additionally do some faster (TTI level) coordination for the cell edge users during the transmission opportunities provided to the cells within the same Node B (e.g. for 2 cells the Node B can use the 2 assigned transmission opportunities as one single pool, which it uses to flexibly schedule transmission of cell edge users avoiding simultaneous transmissions causing intra-frequency interference to increase).

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A method for controlling uplink congestion in a wireless network, the method comprising:
- detecting congestion in an uplink in at least one cell of a cluster of cells within the wireless network;
the method being **characterized in that** it comprises:
- in response to said detection, dividing user devices of said cluster of cells into a plurality of groups (G1,...,GN), wherein said division is done according to one or more technical criteria;
- assigning an uplink transmission schedule to each of the plurality of groups, said transmission schedule based on a type of the corresponding group.

2. The method of claim 1, wherein said step of assigning an uplink transmission schedule comprises allocating a time interval to each group.

3. The method of claim 1, wherein the uplink transmission schedule is further assigned per cell of said cluster of cells.

4. The method of claim 3, wherein the assignment comprises assigning time intervals to each cell of said cluster of cells, and wherein each time interval within a cell is further assigned to at least one group of said plurality of groups.

5. The method of any preceding claim, wherein said uplink transmission schedule is on a rotational basis among groups.

6. The method of any preceding claim, wherein the one or more technical criteria for dividing user devices are based on at least one of the following parameters:
- whether or not user devices are in soft or softer handover;
- pathloss or relative distance of each user device to its corresponding serving node B;
- satisfaction of the user devices with respect to the allocated resources;
- measurements of the transmitted power by a user device;
- a threshold based on Ec/No or RSCP obtained from soft or softer handover settings in the network;
- SIR or SIR error;
- positioning measurements.

7. The method of any preceding claim, wherein congestion in said at least one cell is determined according to at least one of the following criteria: the number of user devices which has been assigned a dedicated physical channel being above a certain threshold, the noise level being above a certain threshold, the number of cell_DCH connected users being above a certain threshold, the number of cell_DCH active users being above a certain threshold, the number of FACH users in the cell being above a certain threshold, the noise level (RTWP) being above a certain threshold, the code and power level in the downlink and the not met accessibility KPI's.

8. The method of any preceding claim, wherein said cluster of cells is formed by said at least one congested cell and at least one additional intra-frequency cell among its neighbour cells.

9. The method of claim 8, wherein said cluster of cells is established according to at least one of the following criteria:
- the cluster is formed by the intra-frequency neighbour cells of the detected congested cell;
- the cluster is formed by cells having user devices in soft or softer handover with the detected congested cell;
- the cluster is formed by the cells of the intra-frequency neighbour cells of the detected congested cell which have user devices in soft or softer handover with the detected congested cell;
- the cluster is formed as follows: once a cell has been identified as congested, checking whether the neighbour cells are also congested, according to the same criterion or to a different one;
- a criterion based on historical statistics from the network.

10. The method of any one of claims 1 to 10, wherein said wireless network is a 3G wireless network.

11. A network entity comprising:
- a detector configured for detecting congestion in uplink in at least one cell of a cluster of cells within a wireless network;
the network entity being **characterized in that** it comprises:
- means for dividing, in response to said detection, user devices of said cluster of cells into a plurality of groups (G1,...,GN), wherein said division is done according to one or more technical criteria;
- a scheduler for assigning an uplink transmission schedule to each of the plurality of groups, said transmission schedule being based on a type of the corresponding group.

12. The network entity of claim 11, which is either a RNC, in which case the cells belonging to said cluster of cells are cells being served by at least two node Bs, or a node B, in which case the cells belonging to said cluster of cells are cells being served by one single node B.

13. The network entity of claim 11 or claim 12, wherein said wireless network is a 3G wireless network.

14. A computer program comprising computer program code means adapted to perform the steps of the method according to any one of claims 1 to 10 when said program is run on a computer, a digital signal processor, a field-programmable gate array, an application-specific integrated circuit, a micro-processor, a micro-controller, or any other form of programmable hardware.

## Patentansprüche

1. Verfahren zum Regeln von Uplink-Überlastung in einem drahtlosen Netzwerk, wobei das Verfahren Folgendes beinhaltet:
- Erkennen von Überlastung in einer Uplink in wenigstens einer Zelle einer Gruppe von Zellen in dem drahtlosen Netzwerk;
wobei das Verfahren **dadurch gekennzeichnet ist, dass** es Folgendes beinhaltet:
- Unterteilen, als Reaktion auf die genannte Erkennung, von Benutzergeräten der genannten Gruppe von Zellen in mehrere Gruppen (G1 ,... ,GN), wobei die genannte Unterteilung gemäß einem oder mehreren technischen Kriterien erfolgt;
- Zuordnen eines Uplink-Sendeplans zu jeder der mehreren Gruppen, wobei der genannte Sendeplan auf einem Typ der entsprechenden Gruppe basiert.

2. Verfahren nach Anspruch 1, wobei der genannte Schritt des Zuordnens eines Uplink-Sendeplans das Zuordnen eines Zeitintervalls zu jeder Gruppe beinhaltet.

3. Verfahren nach Anspruch 1, wobei der Uplink-Sendeplan ferner pro Zelle der genannten Gruppe von Zellen zugeordnet wird.

4. Verfahren nach Anspruch 3, wobei die Zuordnung das Zuordnen von Zeitintervallen zu jeder Zelle der genannten Gruppe von Zellen beinhaltet und wobei jedes Zeitintervall innerhalb einer Zelle ferner wenigstens einer Gruppe der genannten mehreren Gruppen zugeordnet wird.

5. Verfahren nach einem vorherigen Anspruch, wobei der genannte Uplink-Sendeplan auf Rotationsbasis unter Gruppen aufgestellt wird.

6. Verfahren nach einem vorherigen Anspruch, wobei die ein oder mehreren technischen Kriterien zum Unterteilen von Benutzergeräten auf wenigstens einem der folgenden Parameter basieren:
- ob Benutzergeräte in weicher oder weicherer Übergabe sind;
- pfadlose oder relative Distanz jedes Benutzergeräts von seinem entsprechenden Bedienungsknoten B;
- Zufriedenheit der Benutzergeräte mit Bezug auf die zugeordneten Ressourcen;
- Messungen der gesendeten Leistung durch ein Benutzergerät;
- eine Schwelle auf der Basis von Ec/No oder RSCP, erhalten von weichen oder weicheren Übergabeeinstellungen im Netzwerk;
- SIR oder SIR-Fehler;
- Positionierungsmessungen.

7. Verfahren nach einem vorherigen Anspruch, wobei Überlastung in der genannten wenigstens einen Zelle gemäß wenigstens einem der folgenden Kriterien festgestellt wird:
die Zahl der Benutzergeräte, denen ein dedizierter physischer Kanal zugeordnet wurde, liegt über einer bestimmten Schwelle,
der Rauschpegel liegt über einer bestimmten Schwelle,
die Zahl der cell_DCH-zugeschalteten Benutzern liegt über einer bestimmten Schwelle,
die Zahl der cell_DCH-aktiven Benutzer liegt über einer bestimmten Schwelle,
die Zahl der FACH-Benutzer in der Zelle liegt über einer bestimmten Schwelle,
der Rauschpegel (RTWP) liegt über einer bestimmten Schwelle,
Code und Leistungspegel in der Downlink und die unerfüllten Zugänglichkeits-KPI.

8. Verfahren nach einem vorherigen Anspruch, wobei die genannte Gruppe von Zellen von der genannten wenigstens einen überlasteten Zelle und wenigstens einer zusätzlichen Intra-Frequenz-Zelle unter ihren Nachbarzellen gebildet wird.

9. Verfahren nach Anspruch 8, wobei die genannte Gruppe von Zellen gemäß wenigstens einem der folgenden Kriterien eingerichtet wird:
- die Gruppe wird durch die Intra-Frequenz-Nachbarzellen der erkannten überlasteten Zelle gebildet;
- die Gruppe wird von Zellen mit Benutzergeräten in weicher oder weicherer Übergabe mit der erkannten überlasteten Zelle gebildet;
- die Gruppe wird von den Zellen der Intra-Frequenz-Nachbarzellen der erkannten überlasteten Zelle gebildet, die Benutzergeräte in weicher oder weicherer Übergabe mit der erkannten überlasteten Zelle haben;
- die Gruppe wird wie folgt gebildet: nach dem Identifizieren einer Zelle als überlastet wird anhand desselben Kriteriums oder anhand eines anderen Kriteriums geprüft, ob die Nachbarzellen ebenfalls überlastet sind;
- ein Kriterium auf der Basis von historischen Statistiken von dem Netzwerk.

10. Verfahren nach einem der Ansprüche 1 bis 10, wobei das genannte drahtlose Netzwerk ein drahtloses 3G-Netzwerk ist.

11. Netzwerkentität, die Folgendes umfasst:
- einen Detektor, konfiguriert zum Erkennen von Überlastung in der Uplink in wenigstens einer Zelle einer Gruppe von Zellen in einem drahtlosen Netzwerk;
wobei die Netzwerkentität **dadurch gekennzeichnet ist, dass** sie Folgendes umfasst:
- Mittel zum Unterteilen, als Reaktion auf die genannte Erkennung, von Benutzergeräten der genannten Gruppe von Zellen in mehrere Gruppen (G1 ,... ,GN), wobei die genannte Unterteilung gemäß einem oder mehreren technischen Kriterien erfolgt;
- einen Scheduler zum Zuordnen eines Uplink-Sendeplans zu jeder der mehreren Gruppen, wobei der genannte Sendeplan auf einem Typ der entsprechenden Gruppe basiert.

12. Netzwerkentität nach Anspruch 11, die entweder eine RNC ist, und in diesem Fall werden die zu der genannten Gruppe von Zellen gehörenden Zellen von wenigstens zwei Knoten B bedient, oder ein Knoten B, und in diesem Fall werden die zu der genannten Gruppe von Zellen gehörenden Zellen von einem einzigen Knoten B bedient.

13. Netzwerkentität nach Anspruch 11 oder Anspruch 12, wobei das genannte drahtlose Netzwerk ein drahtloses 3G-Netzwerk ist.

14. Computerprogramm, das Computerprogrammcode umfasst, ausgelegt zum Ausführen der Schritte des Verfahrens nach einem der Ansprüche 1 bis 10, wenn das genannte Programm auf einem Computer, einem Digitalsignalprozessor, einem feldprogrammierbaren Gate-Array, einer anwendungsspezifischen integrierten Schaltung, einem Mikroprozessor, einer Mikrosteuerung oder einer beliebigen anderen Form von programmierbarer Hardware abgearbeitet wird.

## Revendications

1. Procédé destiné à contrôler la congestion en liaison montante dans un réseau sans fil, le procédé comprenant :
la détection de la congestion dans une liaison montante dans au moins une cellule d'une grappe de cellules au sein du réseau sans fil ;
le procédé étant **caractérisé en ce qu'**il comprend les opérations consistant à :
en réaction à ladite détection, diviser les dispositifs utilisateurs de ladite grappe de cellules en une pluralité de groupes (G1,..., GN), cas dans lequel ladite division est faite en fonction d'un ou de plusieurs critères techniques ;
attribuer un ordonnancement de transmission en liaison montante à chaque groupe parmi la pluralité de groupes, ledit ordonnancement de transmission étant basé sur un type du groupe correspondant.

2. Procédé selon la revendication 1, ladite étape d'attribution d'un ordonnancement de transmission en liaison montante comprenant l'affectation d'un intervalle de temps à chaque groupe.

3. Procédé selon la revendication 1, l'ordonnancement de transmission en liaison montante étant affecté en outre par cellule de ladite grappe de cellules.

4. Procédé selon la revendication 3, l'affectation comprenant l'affectation d'intervalles de temps à chaque cellule de ladite grappe de cellules, et cas dans lequel chaque intervalle de temps au sein d'une cellule est affecté en outre à au moins un groupe parmi ladite pluralité de groupes.

5. Procédé selon n'importe quelle revendication précédente, ledit ordonnancement de transmission en liaison montante se faisant sur une base de rotation parmi les groupes.

6. Procédé selon n'importe quelle revendication précédente, lesdits un ou plusieurs critères techniques pour diviser les dispositifs utilisateurs étant basés sur au moins un des paramètres suivants :
- si oui ou non des dispositifs utilisateurs se trouvent dans un transfert sans coupure ou avec moins de coupures (« soft / softer handover ») ;
- une perte de chemin ou une distance relative de chaque dispositif utilisateur par rapport à son noeud de desserte B correspondant ;
- la satisfaction des dispositifs utilisateurs par rapport aux ressources affectées ;
- les mesures de la puissance transmise par un dispositif utilisateur ;
- un seuil basé sur Ec/No ou RSCP obtenu à partir des réglages du transfert sans coupure ou avec moins de coupures (« soft / softer handover ») dans le réseau ;
- SIR ou erreur SIR ;
- les mesures de positionnement.

7. Procédé selon n'importe quelle revendication précédente, la congestion dans ladite au moins une cellule étant déterminée en fonction d'au moins un des critères suivants :
le nombre de dispositifs utilisateurs, auxquels on a attribué un canal physique dédié, se situe au-dessus d'un certain seuil,
le niveau de bruit se situe au-dessus d'un certain seuil,
le nombre d'utilisateurs connectés par cell_DCH se situe au-dessus d'un certain seuil,
le nombre d'utilisateurs actifs en cell_DCH se situe au-dessus d'un certain seuil,
le nombre d'utilisateurs FACH dans la cellule se situe au-dessus d'un certain seuil,
le niveau de bruit (RTWP) se situe au-dessus d'un certain seuil,
le code et le niveau de puissance dans la liaison descendante et les KPI d'accessibilité n'ayant pas été satisfaits.

8. Procédé selon n'importe quelle revendication précédente, ladite grappe de cellules étant formée par ladite au moins une cellule à congestion et au moins une cellule additionnelle à intra-fréquence parmi ses cellules voisines.

9. Procédé selon la revendication 8, ladite grappe de cellules étant établie en fonction d'au moins un des critères suivants :
- la grappe est formée par les cellules voisines à intra-fréquence de la cellule à congestion détectée ;
- la grappe est formée par des cellules ayant des dispositifs utilisateurs en transfert sans coupure ou avec moins de coupures (« soft / softer handover ») avec la cellule à congestion détectée ;
- la grappe est formée par les cellules des cellules voisines à intra-fréquence de la cellule à congestion détectée qui ont des dispositifs utilisateurs en transfert sans coupure ou avec moins de coupures (« soft / softer handover ») avec la cellule à congestion détectée ;
- la grappe est formée comme suit : une fois qu'une cellule a été identifiée comme étant en congestion, vérifier si les cellules voisines subissent également une congestion, en fonction du même critère ou d'un critère différent ;
- un critère basé sur des statistiques historiques en provenance du réseau.

10. Procédé selon n'importe laquelle des revendications 1 à 10, ledit réseau sans fil étant un réseau sans fil 3G.

11. Entité de réseau comprenant :
un détecteur configuré de façon à détecter une congestion dans une liaison montante dans au moins une cellule d'une grappe de cellules au sein d'un réseau sans fil ;
l'entité de réseau étant **caractérisée en ce qu'**elle comprend :
des moyens pour diviser, en réaction à ladite détection, des dispositifs utilisateurs de ladite grappe de cellules en une pluralité de groupes (G1,..., GN), cas dans lequel ladite division est faite en fonction d'un ou de plusieurs critères techniques ;
un ordonnanceur pour attribuer un ordonnancement de transmission en liaison montante à chaque groupe parmi la pluralité de groupes, ledit ordonnancement de transmission étant basé sur un type du groupe correspondant.

12. Entité de réseau selon la revendication 11, qui est soit un RNC, auquel cas les cellules appartenant à ladite grappe de cellules sont des cellules qui sont desservies par au moins deux noeuds B, soit un noeud B, auquel cas les cellules appartenant à ladite grappe de cellules sont des cellules qui sont desservies par un seul noeud B.

13. Entité de réseau selon la revendication 11 ou la revendication 12, ledit réseau sans fil étant un réseau sans fil 3G.

14. Programme informatique comprenant des moyens de code de programme informatique conçus pour réaliser les étapes du procédé selon n'importe laquelle des revendications 1 à 10 lorsque ledit programme est exécuté sur un ordinateur, un processeur de signaux numériques, un réseau de portes programmables par l'utilisateur, un circuit intégré spécifique à une application, un microprocesseur, un microcontrôleur, ou toute autre forme de matériel programmable.
